# EUROPEAN PATENT SPECIFICATION

(11) **EP 3 462 403 B1**
(45) Date of publication and mention of the grant of the patent: **26.02.2025**
(21) Application number: 18207417.9
(22) Date of filing: 21.12.2012
(51) Int. Cl.: G06Q 40/08

(54) **SYSTEMS AND METHODS FOR ASSESSING OR MONITORING VEHICLE STATUS OR OPERATOR BEHAVIOUR**
SYSTEME UND VERFAHREN ZUR BEURTEILUNG ODER ÜBERWACHUNG EINES FAHRZEUGZUSTANDES ODER BEDIENERVERHALTENS
SYSTÈMES ET PROCÉDÉS POUR ÉVALUER OU CONTRÔLER UN ÉTAT DE VÉHICULE OU UN COMPORTEMENT D'OPÉRATEUR

(30) Priority: 21.12.2011 US 201161578511 P; 28.03.2012 US 201261616722 P; 25.05.2012 US 201261652017 P; 16.11.2012 US 201213679749; 16.11.2012 US 201213679722; 16.11.2012 US 201213679771; 20.12.2012 US 201261740290 P
(43) Date of publication of application: 03.04.2019
(62) Divisional of application: 12860238.0
(73) Proprietor: Scope Technologies Holdings Limited, Bryanston, Johannesburg (ZA)
(72) Inventor: FUCHS, Gil, 74010 Nes Tziona (IL); LAVIE, Samuel, Bryanston (ZA); JACOBS, Friedl, Bryanston (ZA); VAN DEN BERGH, Johann, Bryanston (ZA)
(74) Representative: Turner, Craig Robert

(56) References cited:
- US-A1- 2010 087 985
- US-A1- 2011 202 305
- US-A1- 2011 307 188
- HON LUNG CHU ET AL: "Poster", MOBISYS '11, ACM, US, 28 June 2011 (2011-06-28), pages 397 - 398, XP058004607, ISBN: 978-1-4503-0643-0, DOI: 10.1145/1999995.2000054
- G. STEIN ET AL: "Compact Vibration Measuring System for in-vehicle Applications", MEASUREMENT SCIENCE REVIEW, vol. 11, no. 5, 29 October 2011 (2011-10-29), XP055421653, DOI: 10.2478/v10048-011-0030-1

## Description

### Field of Invention:

The invention is generally related to telematics and related technologies, and are particularly related to systems and methods for use of pattern recognition in assessing or monitoring a current status of a vehicle, use of an accelerometer to determine a frame of reference, and characterizing of driver performance and its use in determining insurance coverage.

### Background:

Telematics generally refers to the integration of telecommunications and informatics, and is often described in the context of sending and receiving information about moving objects by means of telecommunication devices. A well-known use of telematics is in regard to vehicles, and with control of moving vehicles, such as haulage trucks. Devices such as Global Positioning Systems (GPS) can be used to provide additional information beyond that provided by the vehicle itself. Telematics are of particular use in industries such as fleet management, which might also include tracking the location and operation of ships, trains, and planes.

Telematics information such as that provided by GPS is largely macro in nature, and does not necessarily reflect the micro-conditions of day-to-day driving. As such, conventional telematics information is generally less pertinent for monitoring casual vehicle users, and is typically not intended for providing information of particular interest to insurers, such as the number of passengers in a vehicle at the time of an accident.

Accelerometers are also sometimes used to determine vectors of acceleration or the change in speed of a particular, e.g., vehicle or other equipment. However, a problem arises when the accelerometer is not properly aligned with, or calibrated against a true dimension, such as the true forward direction of a vehicle, since the measurements obtained may not accurately reflect the operation of the vehicle. Compensating for such discrepancies can be complex, requiring computationally expensive calculations of angle cosines, and the resultant accelerometers can be difficult to install and maintain, and in some instances it may not be possible to mathematically compensate for the discrepancies.

Information about a vehicle, together with its driver, also has a bearing on factors such as liability insurance. For example, heavily-used vehicles are on the road more often, which means they potentially have more exposure to accidents. Additionally, certain drivers may have driving habits that are considered less safe than others. Information about these and other factors is useful when formulating insurance quotes for a particular vehicle or driver.

These are the general areas that embodiments of the invention are intended to address.

US2011/307188 relates to a method for collecting and evaluating driving related data, comprising using one or more sensors associated with a handheld mobile device to automatically collect driving data during a data collection session; and using one or more processors to execute computer readable instructions stored in non-transitory memory to calculate, based at least on the collected driving data, one or more metrics related to the driver's driving behavior, and display on a display device the one or more calculated metrics related to the driver's driving behavior.

US2010/087985 relates to the use of identification means in cooperation with a computer system aboard a vehicle to track service and maintenance activities relating to the vehicle when the vehicle is operated under severe conditions.

### Summary:

The invention provides a system, method and non-transitory computer readable medium as set out in the claims.

### Brief Description of the Figures:

**Figure 1** shows an illustration of a system which uses pattern recognition in assessing or monitoring a vehicle status or an operator's driving behavior, which can be used with a system in accordance with the invention.
**Figure 2** shows another illustration of a system which uses pattern recognition in assessing or monitoring a vehicle status or an operator's driving behavior, which can be used with a system in accordance with the invention.
**Figure** 3 shows another illustration of a system which uses pattern recognition in assessing or monitoring a vehicle status or an operator's driving behavior, which can be used with a system in accordance with the invention.
**Figure 4** shows an illustration of a system which uses pattern recognition in assessing or monitoring a vehicle status or an operator's driving behavior, as it may be used with a vehicle and driver, which can be used with a system in accordance with the invention .
**Figure 5** shows another illustration of a system which uses pattern recognition in assessing or monitoring a vehicle status or an operator's driving behavior, which can be used with a system in accordance with the invention.
**Figure 6** shows an illustration of examples of data to be used with pattern recognition in assessing or monitoring a vehicle status or an operator's driving behavior, which can be used with a system in accordance with the invention.
**Figure 7** shows a flowchart of a method of using pattern recognition in assessing or monitoring a vehicle status or an operator's driving behavior, which can be used with a system in accordance with the invention.
**Figure 8** illustrates a system for use with an accelerometer to determine a frame of reference, in accordance with an embodiment.
**Figure 9** illustrates a means for determining a frame of reference, in accordance with an embodiment.
**Figure 10** further illustrates a means for determining a frame of reference, in accordance with an embodiment.
**Figure 11** is a flowchart of a method for determining a frame of reference, in accordance with an embodiment.
**Figure 12** is a flowchart of a method for calibrating and using a frame of reference, in accordance with an embodiment.
**Figure 13** is a flowchart of a method for calibrating and using a frame of reference, in accordance with an embodiment.
**Figure 14** is a flowchart of a method for calibrating and using a frame of reference, in accordance with an embodiment.
**Figure 15** is a flowchart of a method for calibrating and using a frame of reference, in accordance with an embodiment.
**Figure 16** is a flowchart of a method for calibrating and using a frame of reference, in accordance with an embodiment.
**Figure 17** illustrates a system for characterizing driver performance and use in determining insurance coverage, which can be used with a system in accordance with the invention.
**Figure 18** illustrates use of a system for characterizing driver performance, which can be used with a system in accordance with an embodiment.
**Figure 19** illustrates use of an insurance provider and/or broker framework, which can be used with a system in accordance with the invention.
**Figure 20** is a flowchart of a method for characterizing driver performance and use in determining insurance coverage, which can be used with a system in accordance with the invention.
**Figure 21** illustrates a system for use of carbon emissions in characterizing driver performance and use in determining insurance coverage, which can be used with a system in accordance with the invention.
**Figure 22** illustrates use of a system for use of carbon emissions in characterizing driver performance, which can be used with a system in accordance with the invention.
**Figure 23** illustrates use of an insurance provider and/or broker framework, which can be used with a system in accordance with the invention.
**Figure 24** is a flowchart of a method for use of carbon emissions in characterizing driver performance and use in determining insurance coverage, which can be used with a system in accordance with the invention.

### Detailed Description:

### PATTERN RECOGNITION

Described herein, and suitable for use with a system in accordance with the invention, is a system and method which uses pattern recognition in assessing or monitoring events describing a current vehicle status, such as determining when an operator or a passenger has embarked or disembarked the vehicle, and/or events describing an operator's current driving behavior. The information can be used locally or communicated to an operator assessment and monitoring system or service, which can provide additional functionality, such as ensuring a driver's compliance with employment or other mandated driving requirements, or assessing a drivers suitability for insurance reasons, including, e.g., taking into account a drivers reactions to variations in the road, cornering, and other driving situations.

Although many of the illustrations provided herein describe using vehicles and accelerometers, it will be evident that the systems and techniques described herein can be used with operator-controlled devices other than vehicles, such as trains and ships, and with other types of data collection devices.

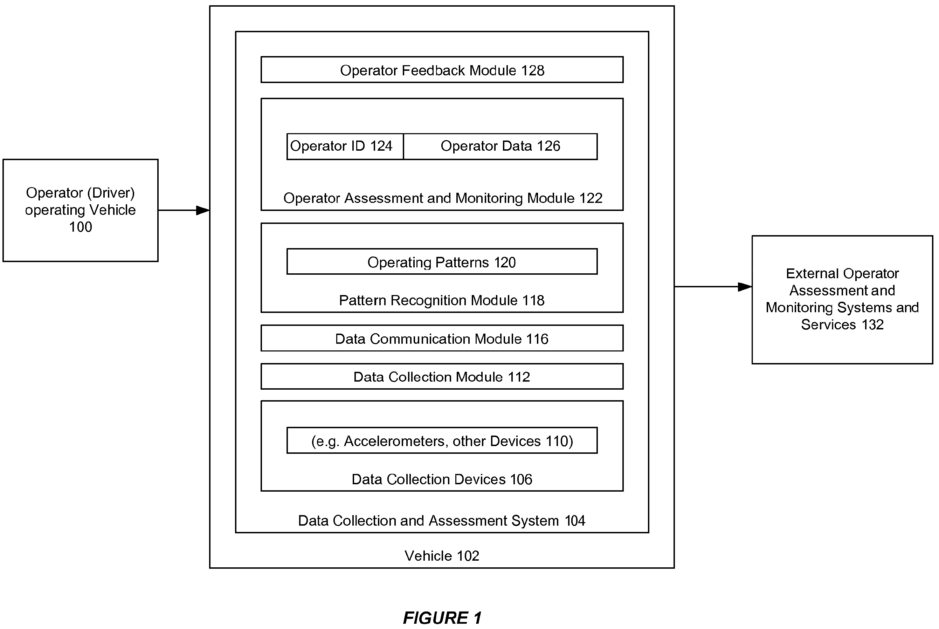

**Figure 1** shows an illustration of a system which uses pattern recognition in assessing or monitoring a vehicle status or an operator's driving behavior. As shown in Figure 1 a vehicle 102, for use by an operator or driver 100, can be equipped with a data collection and assessment system 104. The system can comprise one or more data collection devices 106 (e.g., accelerometers or other measurement devices 110) that can be used to capture data and information, or otherwise measure vehicle actions. A data collection module 112 collects the data or information from the data collection devices, while a data communication module 112 enables communication of the collected data and information, such as through the use of telematics, to one or more other systems.

A pattern recognition module 118 is configured with one or more defined operating patterns 120, each of which operating patterns reflects either a known change in vehicle status corresponding to, e.g. when a passenger has embarked or disembarked the vehicle, or a known vehicle operating or driving behavior. For example, when an operator embarks a vehicle on the driver's side, the vehicle responds in a physically-measurable manner (e.g., by moving downwards momentarily or tilting to one side). When a passenger then embarks the same vehicle, perhaps from an opposite side or through the rear doors, the vehicle responds in a physically- measurable manner, albeit with a different pattern. Each discernible pattern or set of events reflects a known change in the vehicle status. A sequence of patterns can reflect, as in the above example, that the vehicle, or its vehicle status, now likely includes both the operator and the passenger. Similar physically-measurable patterns can reflect when the operator or passenger leaves or disembarks a vehicle.

A vehicle also responds in a physically-measurable manner to operator based driving actions, e.g. by the operator turning the vehicle sharply at a corner. This enables the system to associate other events and patterns with an operator's driving behavior.

Sequences of patterns can be used to reflect changes both in the vehicle status and in the operator's driving behavior over a period of time, say from the time an operator embarks the vehicle, through a series of driving maneuvers, up until the time of a later accident.

An operator assessment and monitoring module 122 includes information about one or more vehicle operators, including for each operator an identifier (ID) 124 and additional data or information 126 describing that operator and/or their typical operating characteristics. An operator feedback module 128 can be used to provide immediate or local feedback to the operator depending on their current vehicle status and/or operator driving behavior.

Any resultant information, pattern matching, or driver feedback can also be remotely communicated to an external operator assessment and monitoring system or service 132, which can provide additional functionality, such as ensuring a driver's compliance with employment or other mandated driving requirements, or assessing a driver's suitability for insurance reasons.

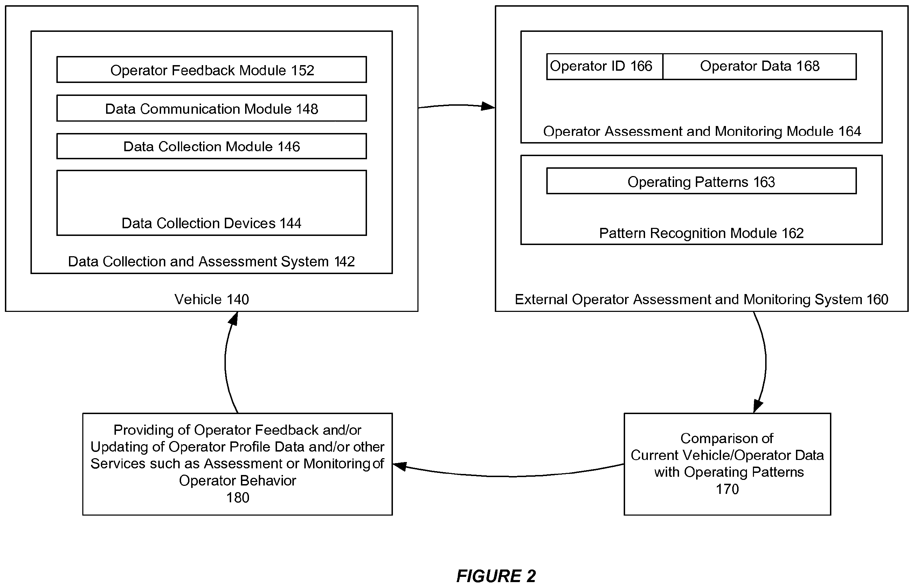

**Figure 2** shows another illustration of a system suitable for use with a system in accordance with the invention which uses pattern recognition in assessing or monitoring a vehicle status or an operator's driving behavior. As shown in Figure 2, depending on the particular implementation, a selection of the components of the system can be provided onboard or locally to the vehicle, while others of the components can be provided elsewhere separately or remotely from the vehicle, or by a third-party. For example, the vehicle 140 can include a collection and assessment system 142 that comprises one or more data collection devices 144, a data collection module 146, a data communication module 148, and an operator feedback module 152. An external operator assessment and monitoring system or service 160, which in this example is provided separately from the vehicle, can include a pattern recognition module 162 configured with one or more defined operating patterns 163, and an operator assessment and monitoring module 164 that includes information about one or more vehicle operators, including for each operator an operator ID 166 and additional data or information 166.

Different arrangements of modules/components can be provided to suit particular implementations. In some examples, the pattern recognition module can be provided onboard or locally to the vehicle, to provide immediate or local feedback to the operator depending on a current status of their vehicle and/or their current driving behavior, without a need for an external system or service. For example, a system including local feedback might determine that too many passengers have embarked the vehicle for preferred safe driving, and communicate this information to the operator prior to them starting the vehicle.

As further shown in Figure 2, the information collected describing a current vehicle/operator status or driving pattern can be compared 170 with known operating patterns, and the results of the comparison used in providing operator feedback and/or updating operator profile data and/or providing other services such as assessment or monitoring of operator behavior 180.

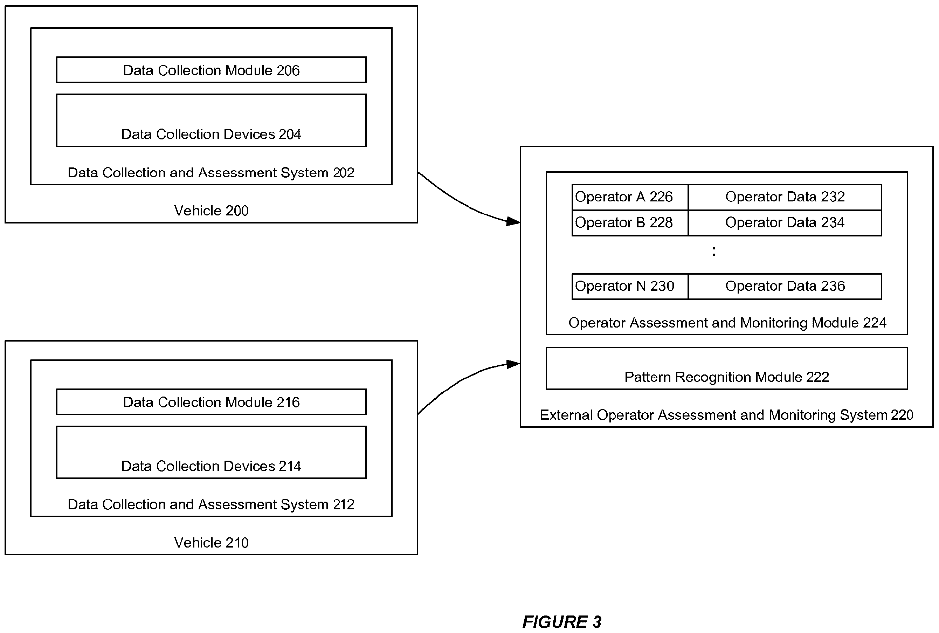

**Figure 3** shows another illustration of a system suitable for use with a system in accordance with the invention which uses pattern recognition in assessing or monitoring a vehicle status or an operator's driving behavior. As shown in Figure 3, depending on the particular implementation, the system can be used to assess and monitor a plurality of vehicles or their operators. Each vehicle 200, 210 comprises a data collection and assessment system 202, 212 that comprises one or more data collection devices 204, 214 (e.g., accelerometers), and a data collection module 206, 216. An external operator assessment and monitoring system or service 220 that includes a pattern recognition module 222 further comprises an operator assessment and monitoring module 224 that includes information about a plurality of vehicle operators, including for each operator an identifier (ID) 226, 228, 230 and additional data or information 232, 234, 236 describing that operator or their operating characteristics.

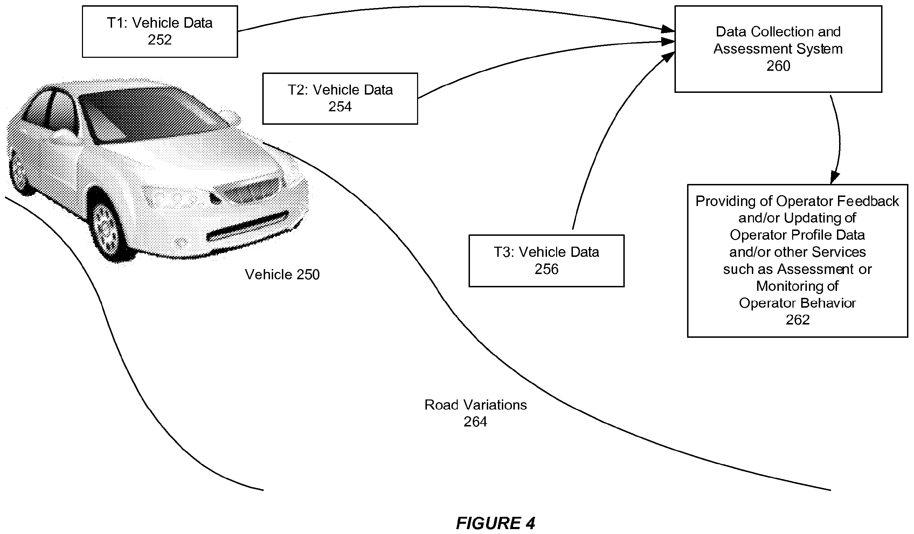

**Figure 4** shows an illustration of a system which uses pattern recognition in assessing or monitoring a vehicle status or an operator's driving behavior, as it may be used with a vehicle and driver. As shown in Figure 4, while a vehicle 250 is used, and as events happen or as time passes T1 (252), T2 (254), T3 (256), current vehicle/operator data is communicated to a data collection and assessment system 260 (which as described above can be provided onboard to the vehicle or remotely via telematics). The information can then be used by or communicated to an operator assessment and monitoring system or service 262, which can provide additional functionality, such as ensuring a driver's compliance with employment or for other mandated driving requirements, or assessing a drivers suitability insurance reasons, including, e.g., taking into account a drivers reactions to variations in the road 264, cornering, and other driving situations.

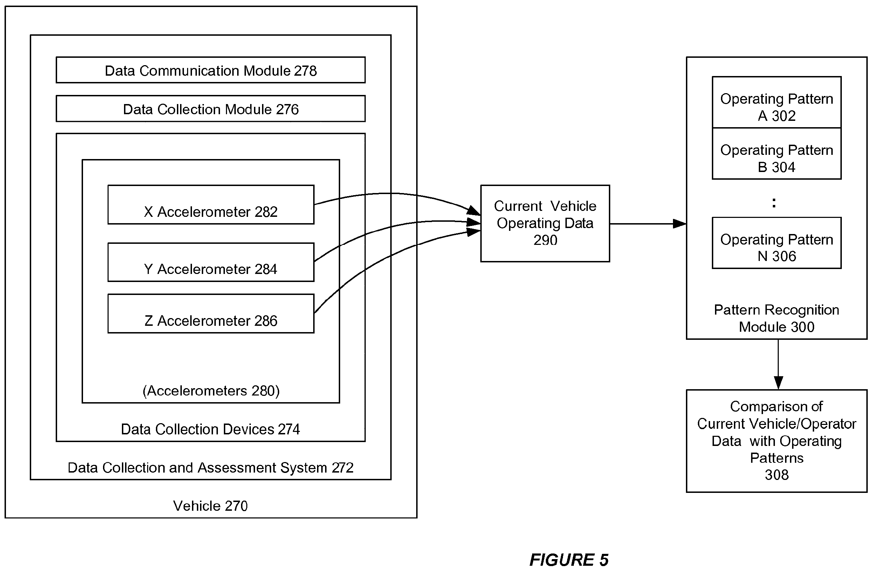

**Figure 5** shows another illustration of a system which uses pattern recognition in assessing or monitoring a vehicle status or an operator's driving behavior. As shown in Figure 5, the vehicle 270 can be equipped with a data collection and assessment system 272, including a data collection module 276, data communication module 278, and accelerometers 280 as data collection devices 274, or similar devices used to measure changes in acceleration or direction of a vehicle. Information can be collected from a plurality of (in the illustrated example) X 282, Y 284, and Z 286 axis-measuring accelerometers, and collectively used to provide a current vehicle/operator data 290. The pattern recognition module 300 can be configured with one or more defined operating patterns 302, 304, 306, each of which reflects a known vehicle/operator status or driving pattern based on accelerometer data. The information provided regarding current vehicle/operator accelerometer-based-data can be compared with the known accelerometer-based operating patterns, and the results of the comparison used providing of operator feedback and/or updating of operator profile data and/or other services such as assessment or monitoring of operator behavior.

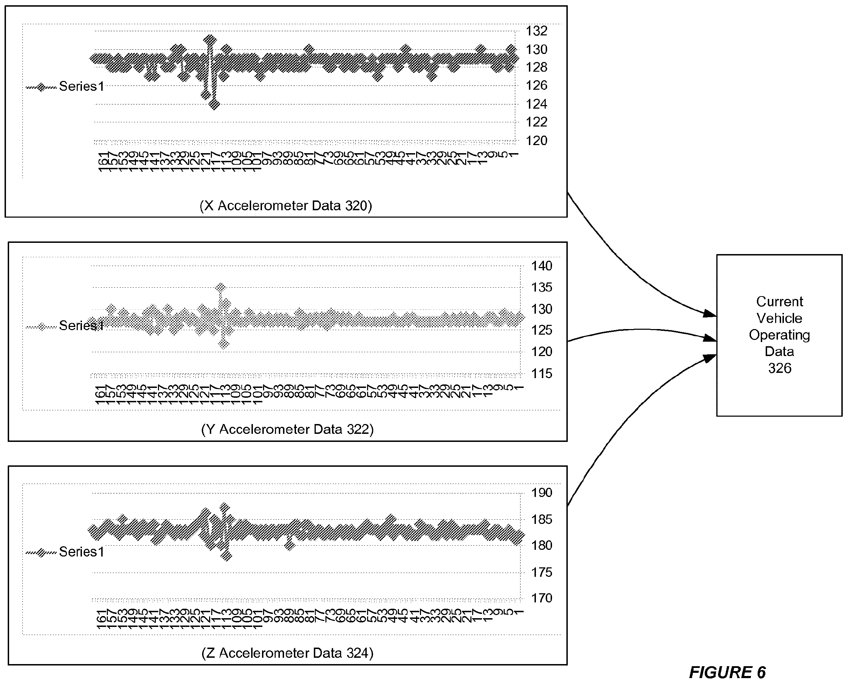

**Figure 6** shows an illustration of examples of data to be used with pattern recognition in assessing or monitoring a vehicle status or an operator's driving behavior. As shown in Figure 6, wherein the data collection and assessment system utilize accelerometers, or similar devices used to measure changes in acceleration or direction of a vehicle, information can be collected from a plurality of X, Y, and Z axis-measuring accelerometers (320, 322, 324), and collectively used to provide a current vehicle/operating data 326. For example, as described above, when an operator or passenger embarks or disembarks a vehicle on the driver's side, the vehicle responds in a physically-measurable manner. The accelerometers can detect the minor accelerations in the vehicle when a person enters the car and closes the door, takes a corner or brakes sharply, or drives in a manner considered unsafe. The information collected describing a current vehicle/operator status or driving pattern can be compared with known operating patterns, and the results of the comparison used in providing operator feedback and/or updating operator profile data and/or providing other services such as assessment or monitoring of operator behavior 328.

As further shown in Figure 6, each of the graphs 320, 322, 342 can show accelerations in the X, Y, and Z axes respectively for a stationary vehicle. Each time a passenger enter/exits the vehicle and the engine is on, the system registers a low amplitude up and down motion hovering around value 128 +-2 units for a non-event average, followed by a minor perturbation simultaneous in all three axes where the amplitude jumps above the "normal" amplitude. The system can recognize these up and down characteristics as a known pattern.

Further discernment can include, e.g. recognizing minor variations in the pattern to determine the vehicle being pushed to the left, representative of an entry on the right side; or the vehicle being pushed forward and to the right, representative of an entry to the left-rear side. Information such as this can be used to ensure a driver's compliance with employment or other mandated driving requirements, or assessing a drivers suitability for insurance reasons, including, e.g. preventing insurance fraud, detecting patterns and then using occurrences of said patterns when they occur, to say with some level of confidence (a confidence coefficient) that an event of certain type occurred, which is particularly useful for post-accident investigations.

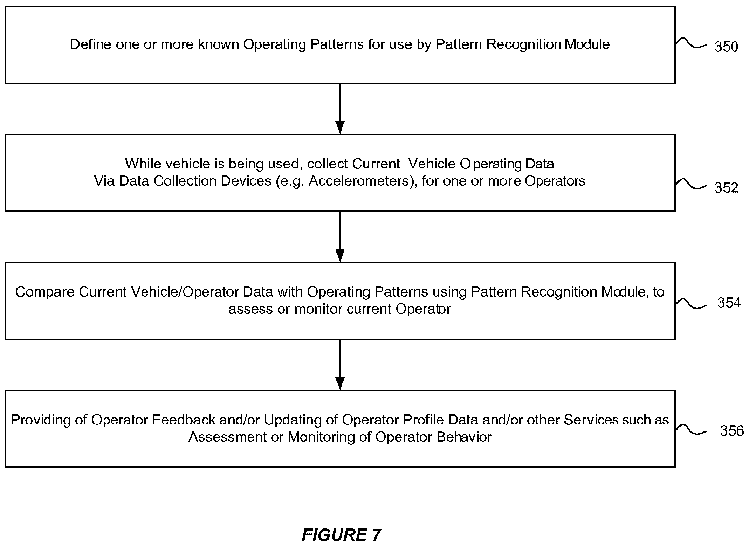

**Figure 7** shows a flowchart of a method of using pattern recognition in assessing or monitoring a vehicle status or an operator's driving behavior. As shown in Figure 7, at step 350, one or more known operating patterns are defined for use by the pattern recognition module. At step 352, while the vehicle is being used, current vehicle operating data is collected via data collection devices (e.g. accelerometers), for one or more operators. At step 254, the current vehicle/operator data is compared with operating patterns using pattern recognition module, to assess or monitor current operator. At step 356, the system provides operator feedback and/or updates of operator profile data and/or provides other services such as assessment or monitoring of operator behavior.

In accordance with various examples, the above-described systems and methods can be employed in a variety of use cases. For example, the system can be used in conjunction with an automatic rescue or emergency dispatch system, wherein information about the number of passengers in a vehicle can be automatically communicated to a central rescue or emergency service. As another example, the system can be used in conjunction with systems for parental or otherwise tracking the habits of younger drivers, e.g. to ensure that the number of passengers within a vehicle is kept within certain predefined limits, or for vehicle insurance purposes.

### USE OF ACCELEROMETER TO DETERMINE FRAME OF REFERENCE

As described above, in the field of telematics, a problem arises when accelerometers are used but are not properly aligned with, or calibrated against a true dimension, such as the true forward direction of a vehicle, since the measurements obtained may not truly reflect the operation of the vehicle.

In accordance with an embodiment, described herein is a system and method for use with a device that includes an accelerometer, which can be used to determine a frame of reference for the device relative to a moving vehicle or other equipment, and which can be subsequently used in assessing or monitoring the status of the vehicle or an operator thereof.

In accordance with an embodiment, the system can be provided as a small device which in turn can be mounted to e.g., the interior of a vehicle, and which includes one or more accelerometers. Since a vehicle generally travels in a horizontal plane, by sampling accelerometer data over a period of time, and also referring to information from one or more other on-board devices, such as a GPS, gyroscope or additional accelerometer, the system can first determine where the vehicle is "on the plane", i.e. determine the vehicle's true x-y plane inasmuch as it differs from the device/accelerometer's orientation and understanding of the plane. Given the knowledge of the x-y plane, the vehicle's z-axis can be readily determined in that the z- axis is perpendicular to the x-y plane. Next, to determine the vehicle's x-axis, data from the accelerometer, optionally in combination with the information from the other onboard devices, is used to determine the vehicle's forward direction. In accordance with an embodiment, since a vehicle's most prevalent acceleration is in a forward direction (while in contrast its most prevalent deceleration is in the opposite direction), a vehicle's instances of braking provides a particularly discernible change in acceleration/deceleration. By averaging the accelerometer data over several braking instances, the system can determine the vehicle's forward motion along a y-axis. Given the knowledge of the y-axis, the vehicle's x-axis can be readily determined in that it lies within the x-y plane, perpendicular to the y-axis (in other words, mutually perpendicular to both the y and z axes).

The resultant determinations can be stored as a rotation matrix that reflects the skew, represented either in Cartesian or polar coordinates, between the device/accelerometer's orientation and understanding of direction, and the vehicle's true orientation or direction in three-dimensions. The information can be used to provide corrections to the accelerometer data, and to more accurately determine the vehicle's true orientation/direction and motion within a three-dimensional frame of reference.

Although the above approach can be employed to first determine the frame of reference's x-y plane, followed by its z-axis, y-axis, and lastly x-axis, it will be evident that, in accordance with other embodiments and approaches, the various axes can be determined in a different order, e.g., first the x-y plane, followed by the x-axis, and finally the y and z axes. The particular order is dependent on the particular desired implementation, but the net result (i.e., the determination of those axes that comprise the frame of reference) is otherwise the same.

Also, it will be evident that the above approach works only while the system is itself mounted to or otherwise fixed in position relative to the vehicle while the vehicle is moving. If, during use, the system was free to move relative to the vehicle, then it could not serve as an accurate frame of reference. However, in accordance with an embodiment, to account for occasional movement of the device, whenever a particular trip is finished, and subsequently a new trip is started at a later time, the system can be quickly reset and recalibrated using the above technique, to allow for occasions in which the system is removed from the vehicle between trips.

In accordance with an embodiment, information from the system regarding the motions of the vehicle in three dimensions can be used, for example, as an input to another system or process for determining operator behavior, such as that described in U.S. Provisional Patent Application titled "SYSTEM AND METHOD FOR USE OF PATTERN RECOGNITION IN ASSESSING OR MONITORING VEHICLE STATUS OR OPERATOR DRIVING BEHAVIOR", Application No. 61/578,511, filed December 21, 2011. As described therein, information about the vehicle's maneuvers can be used in combination with known operating patterns to determine or assess an operator's driving pattern.

Although the illustrations provided herein primarily describe embodiments using vehicles, it will be evident that the techniques described herein can be similarly used with, e.g., trains, ships, airplanes, containers, or other moving equipment. Additionally, the techniques described herein can be used in combination with other systems, such as those that use dead-reckoning techniques, to provide additional types of combined information.

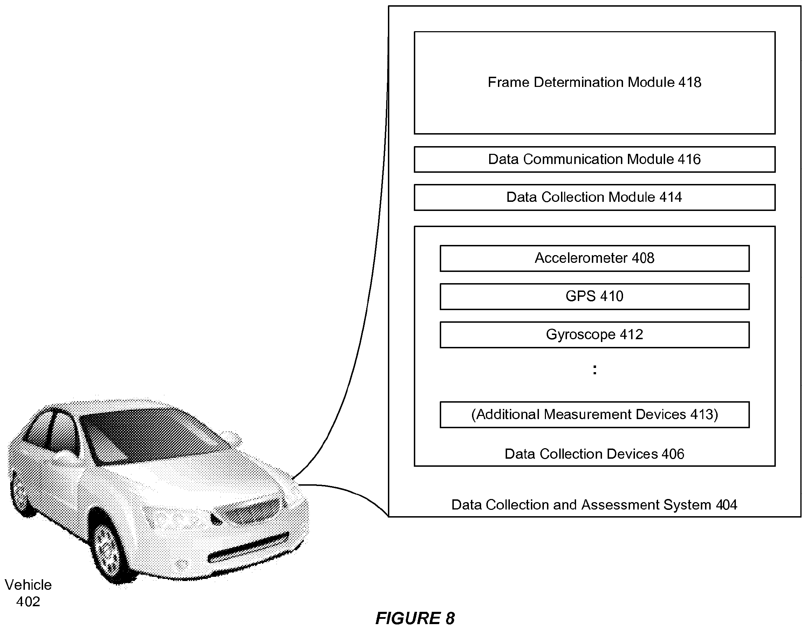

**Figure 8** illustrates a system for use with an accelerometer to determine a frame of reference, in accordance with an embodiment. As shown in Figure 8, in accordance with an embodiment, a vehicle 402 can be equipped with a data collection and assessment system 404. The data collection and assessment system, which as described above can be provided as a small device mounted to the interior of a vehicle, comprises one or more data collection devices 406, including an accelerometer 408. Optionally other measurement devices, such as an on-board GPS 410, gyroscope 412, or additional measurement devices 413, can also be used to provide data or information about the vehicle's maneuvers. A data collection module 414 collects the data or information from the data collection devices, while a data communication module 416 enables communication of the collected data and information, such as through the use of telematics, to one or more other systems, such as an external system for assessing an operator's driving pattern. A frame determination module 418 samples or otherwise receives accelerometer data over a period of time, and also information from the one or more other on-board devices, and uses this information to determine the frame of reference.

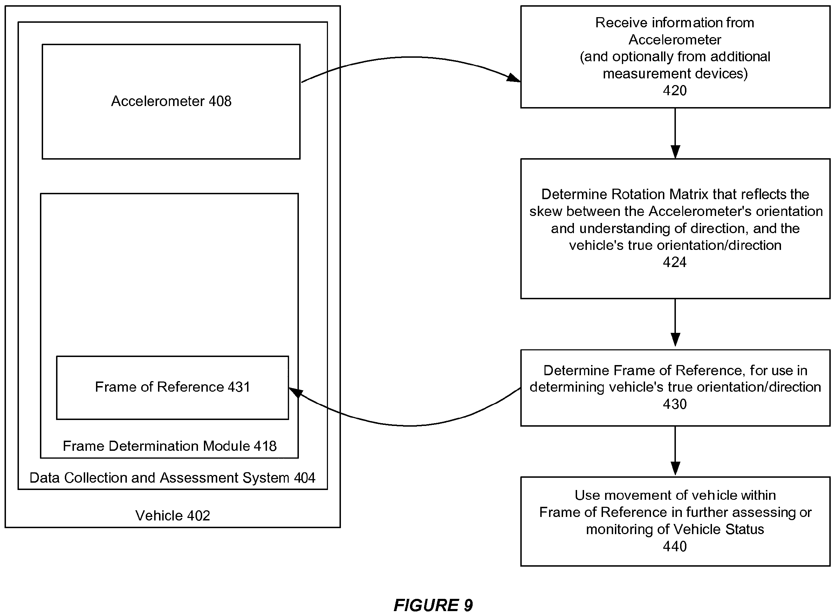

**Figure 9** illustrates a means for determining a frame of reference, in accordance with an embodiment. As shown in Figure 9, as the vehicle moves, the system receives data or information 420 from the accelerometer (and optionally from any additional measurement devices provided). This information is used by the frame of reference determination module to determine a rotation matrix or skew 424 between the device/accelerometer's orientation and understanding of direction, and the vehicle's true orientation or direction in three-dimensions, and to more accurately determine the vehicle's true orientation/direction and motion within a three-dimensional frame of reference 430. The movement of the vehicle within the frame of reference can be used, e.g., in combination with known operating patterns as described above, to determine or assess an operator's driving pattern 440.

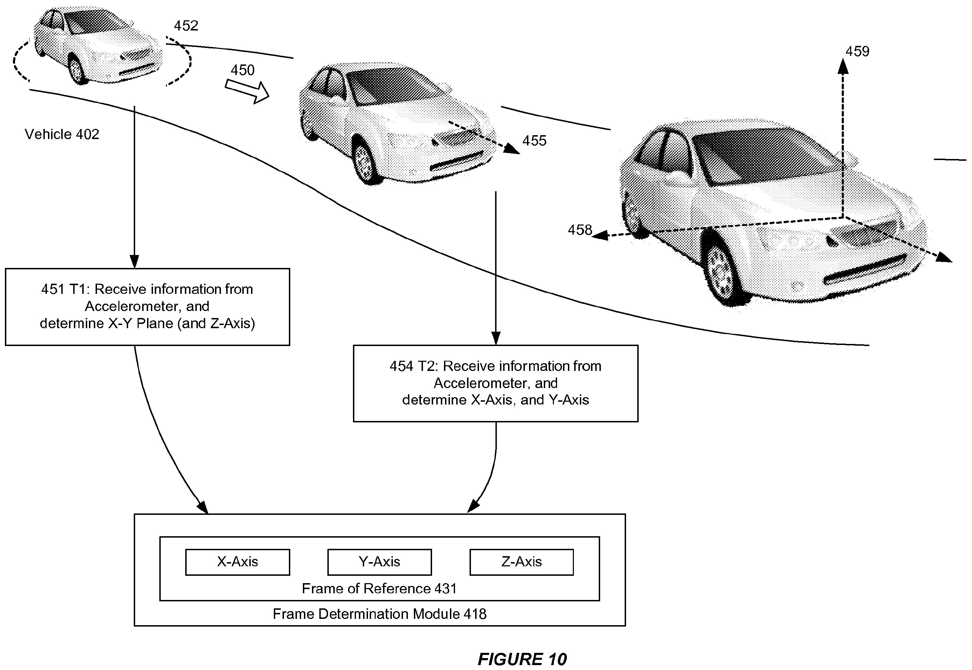

**Figure 10** further illustrates a means for determining a frame of reference, in accordance with an embodiment. As shown in Figure 10, as the vehicle moves 450, at a time T1, data is received 451 from the accelerometer and from one or more other on-board devices, such as a GPS, gyroscope or additional accelerometer, and is used to determine an x-y plane for the vehicle 452, taking into account that the vehicle generally travels horizontally and by averaging the accelerometer data over a period of time. Given the knowledge of the x-y plane, the vehicle's z-axis can be readily determined in that the z-axis is perpendicular to the x-y plane. At a later time T2, data received 454 from the accelerometer is used to determine a y-axis 455, by averaging the accelerometer data over several braking instances. Given the knowledge of the z and y axes, the vehicle's x-axis can be readily determined.

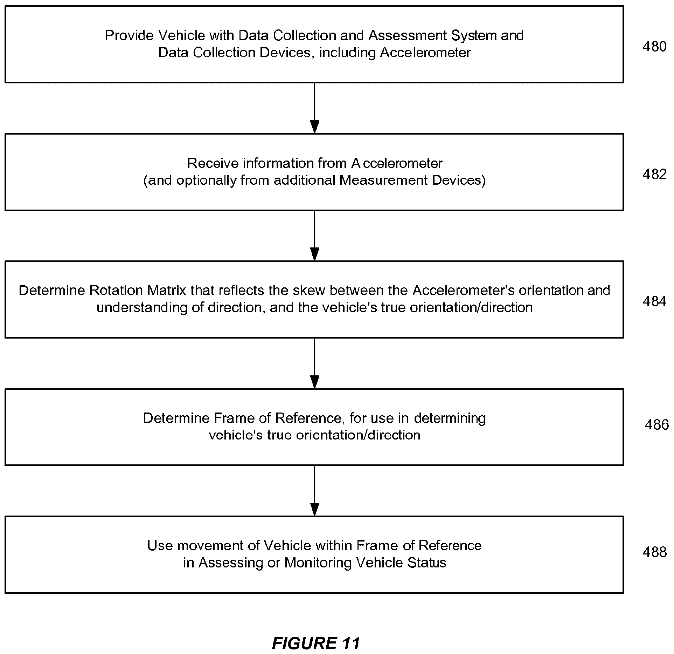

**Figure 11** is a flowchart of a method for determining a frame of reference, in accordance with an embodiment. As shown in Figure 11, at step 480, a vehicle is provided with a data collection and assessment system and data collection devices, including an accelerometer. At step 482, the system receives information from the accelerometer (and optionally from additional measurement devices), and, at step 484, determines a frame of reference, including first an x-y plane; and then an x-axis, y-axis and z-axis. At step 486, the movement of the vehicle within the frame of reference is used in assessing or monitoring the vehicle status.

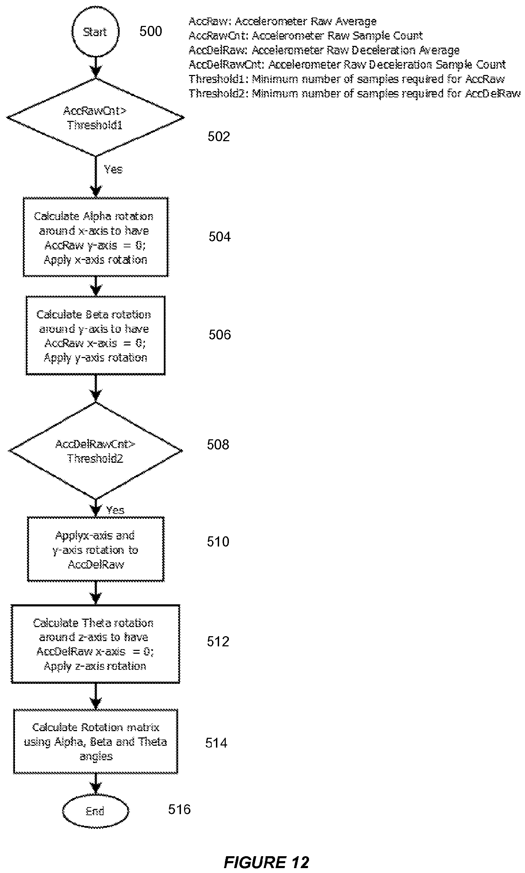

**Figures 12-16** are flowcharts of methods for calibrating and using a frame of reference, in accordance with an embodiment. The embodiments shown therein are provided for purposes of illustration, and it will be evident that in accordance with other embodiments, different steps can be used.

As shown in Figures 12-16, the rotation matrix skew can be indicated by alpha, beta, and theta components, which represent the necessary correction between the device/accelerometer's orientation and understanding of direction, and the vehicle's true orientation or direction in three-dimensions. In accordance with other embodiments, different ways of representing skew can be used.

As shown in Figure 12, in accordance with an embodiment, at start 500, the following variables are initially defined:
AccRaw: Accelerometer Raw Average
AccRawCnt: Accelerometer Raw Sample Count
AccDelRaw: Accelerometer Raw Deceleration Average
AccDelRawCnt: Accelerometer Raw Deceleration Sample Count
Threshold1: Minimum number of samples required for AccRaw
Threshold2: Minimum number of samples required for AccDelRaw

At step 502, the system determines whether AccRawCnt > Threshold1. If it is, then, at step 504, a value is calculated for Alpha rotation around the x-axis, to have AccRaw y-axis = 0; and to apply x-axis rotation. At step 506, a value is calculated for Beta rotation around the y-axis, to have AccRaw x-axis = 0; and to apply y-axis rotation. At step 508, the system determines whether AccRawCnt > Threshold2. If it is, then, at step 510, an x-axis and y-axis rotation is applied to AccDelRaw. At step 512, a value is calculated for Theta rotation around the z-axis, to have AccDelRaw x-axis = 0; and to apply z-axis rotation. At step 514, a rotation matrix is calculated using the Alpha, Beta and Theta angles. The process then ends 516.

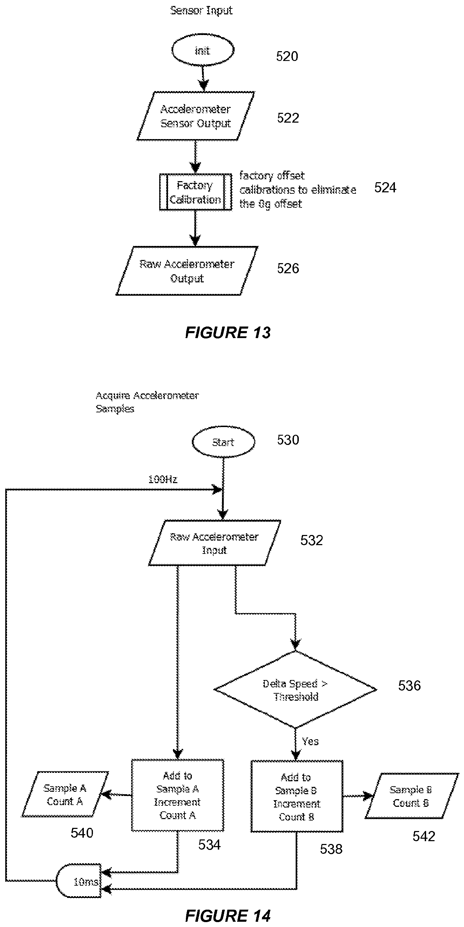

Figure 13 illustrates a system calibration process in accordance with an embodiment. As shown in Figure 13, at step 520 the process is initialized. At step 522, the accelerometer output is received. At step 524, the system applies any factory offset calibrations, to eliminate any 0g offset. At step 526, the raw accelerometer output can then be provided 526.

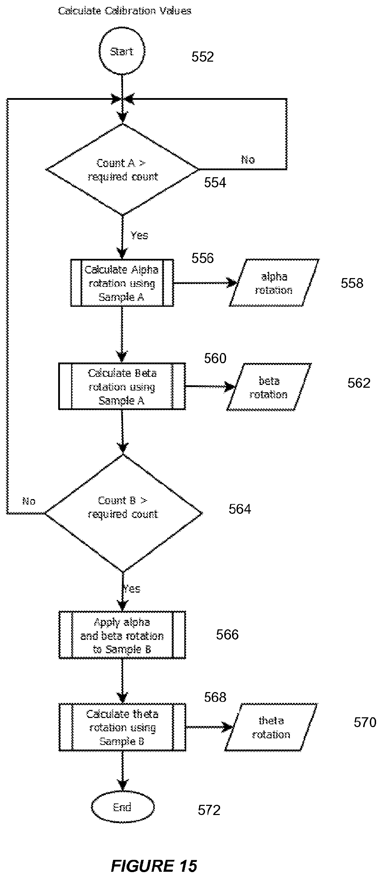

Figures 14 and 15 illustrate a data sampling process in accordance with an embodiment. As shown in Figure 15, the process starts 530 by acquiring accelerometer samples, including raw accelerometer input 532. The input is added both at steps 534, 536 to a sample A, which is incremented, and at step 536 if the acceleration is greater than a threshold value (Delta Speed > Threshold) to a sample B 538 542, which is incremented. The counts can be compared at regular intervals.

As shown in Figure 15, following start 552, at step 554, Count A is compared to a required count, and if greater, the Alpha rotation is determined 556, 558 using the Sample A, and the Beta rotation is determined 560, 562 using the Sample A. At step 564, Count B is compared to a required count, and if greater, then at step 566 Alpha and Beta rotation are applied to Sample B, and the Theta rotation is determined 568, 570 using the Sample B. The process then ends 572.

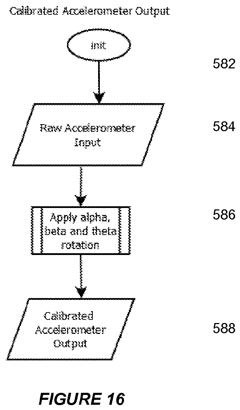

Figure 16 illustrates a calibrated accelerometer output process in accordance with an embodiment. As shown in Figure 16, at step 582 the process is initialized. At step 584, the raw accelerometer input is received. At step 586, the system applies the Alpha, Beta and Theta rotations. At step 588, the calibrated accelerometer output can then be provided 526.

### CHARACTERIZING OF DRIVER PERFORMANCE

As described above, in the insurance industry, information about such factors as whether a driver of a vehicle observes safe driving habits is useful when formulating insurance quotes for a particular vehicle or driver.

Described herein, and suitable for use with the invention, is a system and method for characterizing driver performance and using such characterization to determine a risk score and/or profile associated with a particular insured. The risk profile/score can then be used to determine an insurance premium for the insured. A driver can use a portable device (e.g., a smartphone, PDA, computer or other device) equipped with a data collection and assessment environment, including one or more data collection devices (e.g., accelerometers, GPS) that can be used to capture data and information or otherwise measure vehicle actions, and a data collection and assessment logic (e.g., a downloadable software application).

The data collection and assessment environment can provide information to the driver about their driving performance, such as whether they make rapid braking/acceleration maneuvers, or drift outside of their lane, which the driver can then use to improve their driving skills.

The information can also be used by the driver when obtaining liability insurance quotes. A framework (system) receives information about the driver's driving performance, and uses this information either to determine an insurance quote, or act as a broker/aggregator in inviting other insurance providers to offer an insurance quote. This allows the insurance quote to be better personalized to the driver themselves. In particular, the framework enables the driver to collect his own behavior data and provide that data to an insurer or insurance broker/aggregator, to receive a usage based insurance quote (UBI).

The system and the driver performance information can be used to augment traditional insurance application questionnaires. The information received from a driver's data collection and assessment environment can be secured and/or anonymized prior to determining the driver's insurance quote, or inviting other insurance providers to offer an insurance quote.

In a typical implementation, a less-safe (i.e., "bad") driver, as determined by their driving performance, may not receive any benefit in providing their information. However, a safer (i.e., "good") driver, as determined by their driving performance, may receive a discount on their insurance quote that reflects their better performance. The framework can also be used to consider periodic improvements, and provide additional insurance discounts to the driver over time.

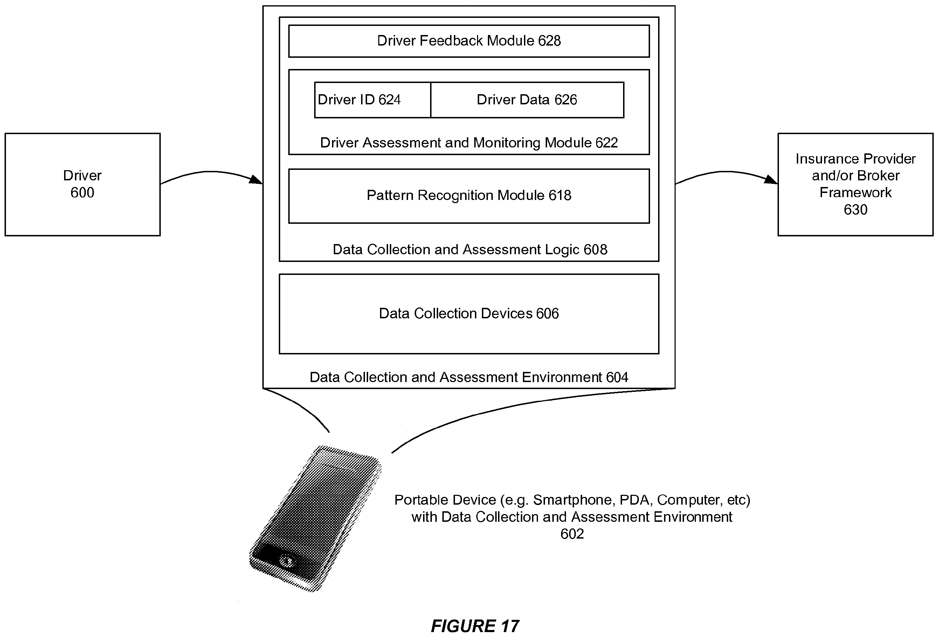

**Figure 17** illustrates a system for characterizing vehicle driver performance and use in determining insurance coverage, which can be used with a system in accordance with the invention.

As shown in Figure 17, a driver 600, can use a portable device 602 (e.g., a smartphone, PDA, computer, or other device) which is equipped with a data collection and assessment environment 604. The portable device can itself include one or more data collection devices 606 (e.g., accelerometers, GPS, or other measurement devices) that can be used to capture data and information or otherwise measure vehicle actions. In accordance with other examples the data collection devices can be added to the portable device, e.g., as an aftermarket accessory.

A data collection and assessment logic 608 can similarly be built-into the portable device, or added as an aftermarket accessory, e.g., as a downloadable software application (app).

A pattern recognition module 618 is configured with one or more defined operating patterns, each of which operating patterns reflects either a known change in vehicle status, or a known vehicle operating or driving behavior. For example, a vehicle responds in a physically-measurable manner to driver-based driving actions, e.g., by the driver turning the vehicle sharply at a corner. This enables the system to associate patterns with a driver's driving behavior, and to determine a risk score and/or profile associated with a particular driver. Sequences of patterns can be used to reflect changes both in the vehicle status and in the driver's performance, i.e., their driving behavior over a period of time, say from the time a driver embarks the vehicle, through a series of driving maneuvers, up until the time they disembark the vehicle, or over a period of days, weeks or months.

A driver assessment and monitoring module 622 includes information about one or more drivers, including for each driver an identifier (ID) 624 and additional data or information 626 describing that driver and/or their typical operating characteristics. A driver feedback module 628 can be used to provide immediate or local feedback to the driver depending on their current vehicle status and/or driving performance.

The resultant information, pattern matching, or driver feedback can be remotely communicated to an external insurance provider and/or broker framework (system) 630, which uses the received information in determining insurance quotes for a particular vehicle or driver, or inviting other insurance providers to offer an insurance quote for the particular vehicle or driver. In particular, the framework enables the driver to collect his own behavior data and provide that data to an insurer or insurance broker/aggregator, to receive a usage based insurance quote (UBI).

The system can incorporate or utilize additional functionality as further described in U.S. Provisional Patent Application titled "SYSTEM AND METHOD FOR USE OF PATTERN RECOGNITION IN ASSESSING OR MONITORING VEHICLE STATUS OR OPERATOR DRIVING BEHAVIOR", Application No. 61/578,511, filed December 21, 2011.

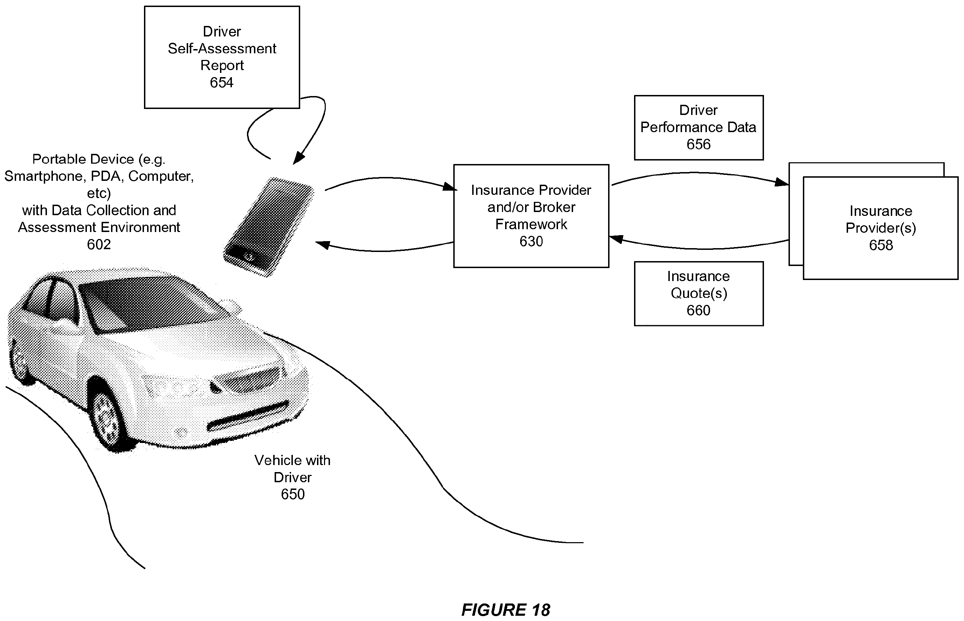

**Figure 18** illustrates use of a system for characterizing driver performance. As shown in Figure 18, during use, a driver of a vehicle 650 can use their portable device (e.g., a smartphone, PDA, computer, or other device) suitably equipped with a data collection and assessment environment, to track their driving performance, either for their own use 654, or to communicate the information to an insurance provider and/or broker framework for use in determining an insurance quote, or act as a broker/aggregator in inviting 656 other insurance providers 658 to offer 660 an insurance quote. This allows the insurance quote to be better personalized to the driver themselves.

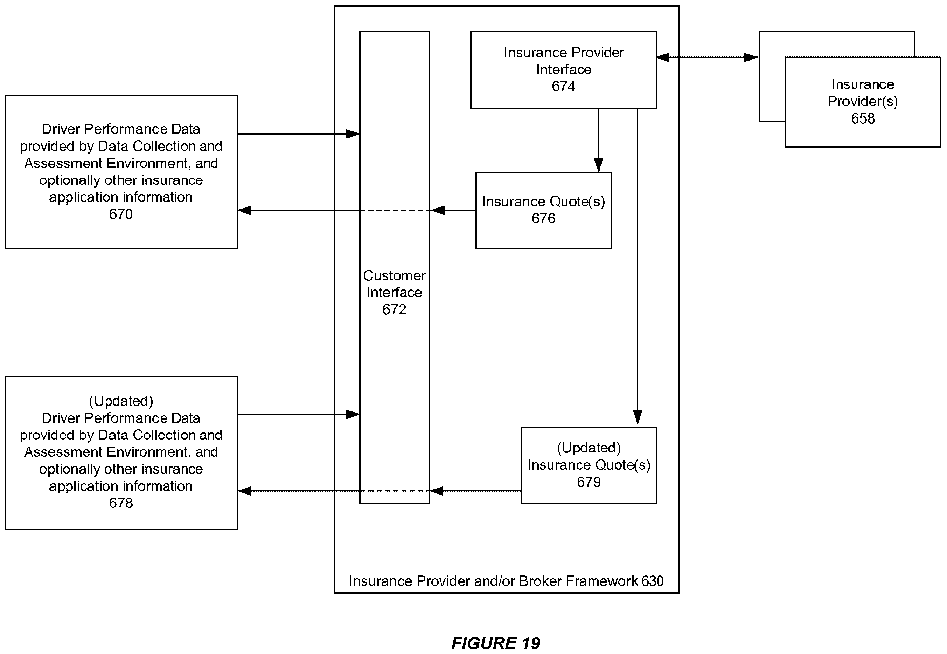

**Figure 19** illustrates use of an insurance provider and/or broker framework. As shown in Figure 19, an insurance provider and/or broker framework includes a customer interface 672 that allows a driver to communicate their driving performance information 670, and an insurance provider interface 674 that enables the insurance provider and/or broker to invite 656 other insurance providers 658 to offer an insurance quote 676 personalized to the driver. As described previously, the information received from a driver's data collection and assessment environment can be secured and/or anonymized prior to determining the driver's insurance quote, or inviting other insurance providers to offer an insurance quote. At a later point in time, the driver can provide updated driver performance data 678, and receive an updated insurance quote(s) 679 as required.

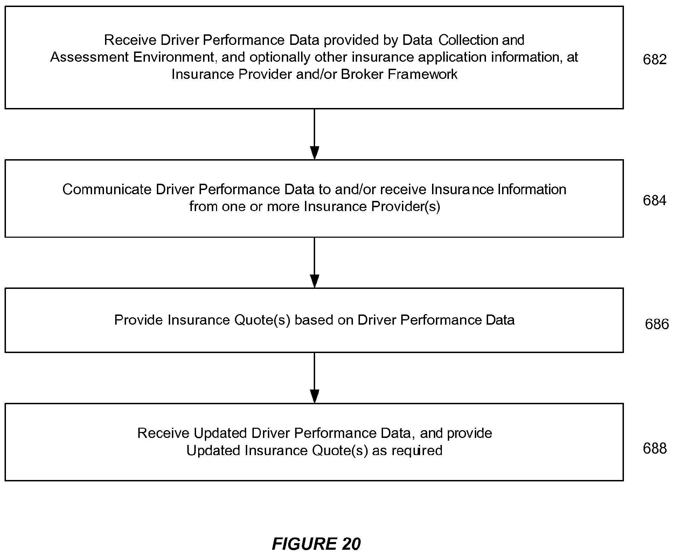

**Figure 20** is a flowchart of a method for characterizing driver performance and use in determining insurance coverage. As shown in Figure 20, at step 682, the system receives driver performance data provided by a data collection and assessment environment, and optionally other insurance application information, at an insurance provider and/or broker framework. At step 684, the system communicates driver performance data to and/or receives insurance information from one or more insurance provider(s). At step 686, insurance quote(s) are provided based on the driver performance data. At step 688, the system can receive updated driver performance data, and provide updated insurance quote(s) as required.

A risk score can be calculated on the portable device (e.g., smartphone, PDA, computer or other device) itself. Alternatively, raw data or information can be collected from the portable device and uploaded to a driver rating platform for risk score calculation, resulting in a score that can then either be provided directly to the insurance provider, or reported back to the insured, for their use in applying for insurance coverage.

### USE OF CARBON EMISSIONS IN CHARACTERIZING DRIVER PERFORMANCE

Described herein, and suitable for use with the invention, is a system and method for use of carbon emissions in characterizing driver performance and using such characterization to determine a profile associated with a particular insured. The profile can then be used to determine an insurance premium for the insured. A driver can use a portable device equipped with a data collection and assessment environment, including one or more data collection devices that can be used to capture data and information or otherwise measure the carbon emissions associated with a vehicle. A framework (system) can use this information either to determine an insurance quote, or act as a broker/aggregator in inviting other insurance providers to offer an insurance quote, or usage based insurance quote (UBI).

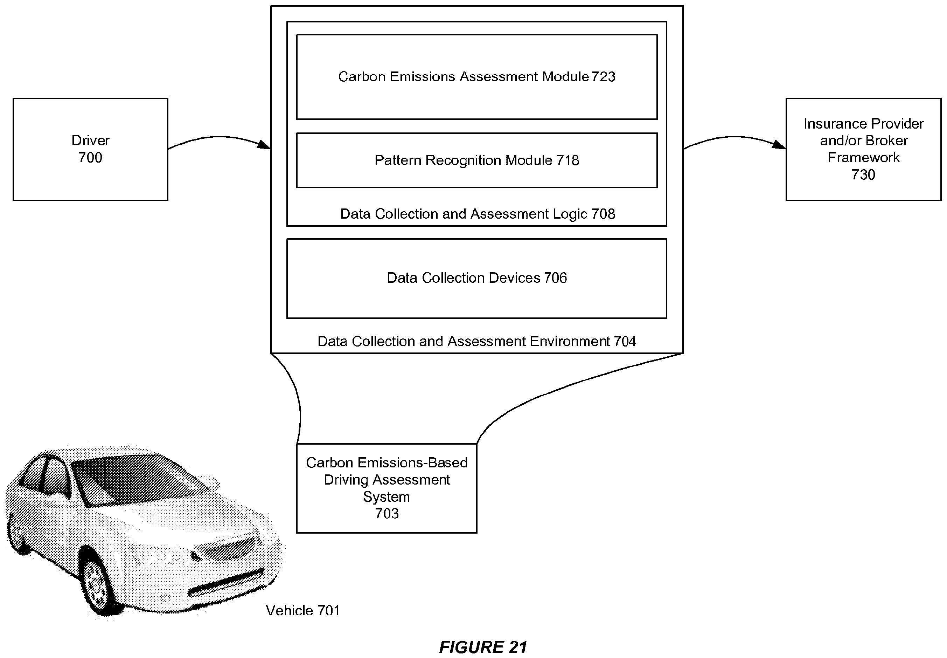

**Figure 21** illustrates a system for use of carbon emissions in characterizing vehicle driver performance and use in determining insurance coverage.

The amount of carbon emissions a particular vehicle generates is dependent on a variety of factors, such as the type of vehicle and its overall condition, environmental conditions, and the manner in which the vehicle is operated. For example, a vehicle driven at high speeds may generate more emissions than a vehicle driven at moderate speeds.

As shown in Figure 21, a driver 700 of a vehicle 701 can use a carbon emissions-based driving assessment system 703, which can be provided as a portable device (e.g., a smartphone, PDA, computer, or other portable device), and which is equipped with a data collection and assessment environment 704.

The assessment system can itself include one or more data collection devices 706 (e.g., accelerometers, GPS, or other measurement devices) that can be used to capture data and information or otherwise measure vehicle actions, together with a data collection and assessment logic 708. A pattern recognition module 718 is configured with one or more defined operating patterns, each of which operating patterns reflects either a known change in vehicle status, or a known vehicle operating or driving behavior. For example, a vehicle responds in a physically-measurable manner to driver-based driving actions, e.g., by the driver turning the vehicle sharply at a corner. This enables the system to associate patterns with certain driving behaviors.

A carbon emissions assessment module 723 includes information about typical carbon emissions, and can compare current patterns of driving with known patterns to calculate carbon emissions for a current driver/vehicle.

The resultant information can be remotely communicated to an external insurance provider and/or broker framework (system) 730, which uses the received information in comparing the calculated carbon emissions against estimated carbon emissions for similar types of vehicle, which is indicative of the driver's driving profile, and using the results in determining insurance quotes for the current vehicle/driver, or inviting other insurance providers to offer an insurance quote, or a usage based insurance quote (UBI).

The system can incorporate or utilize additional functionality as further described in U.S. Patent Application titled "SYSTEM AND METHOD FOR USE OF PATTERN RECOGNITION IN ASSESSING OR MONITORING VEHICLE STATUS OR OPERATOR DRIVING BEHAVIOR"; Application No. 13/679,722, filed November 16, 2012, which claims the benefit of priority to U.S. Provisional Patent Application No. 61/578,511, filed December 21, 2011.

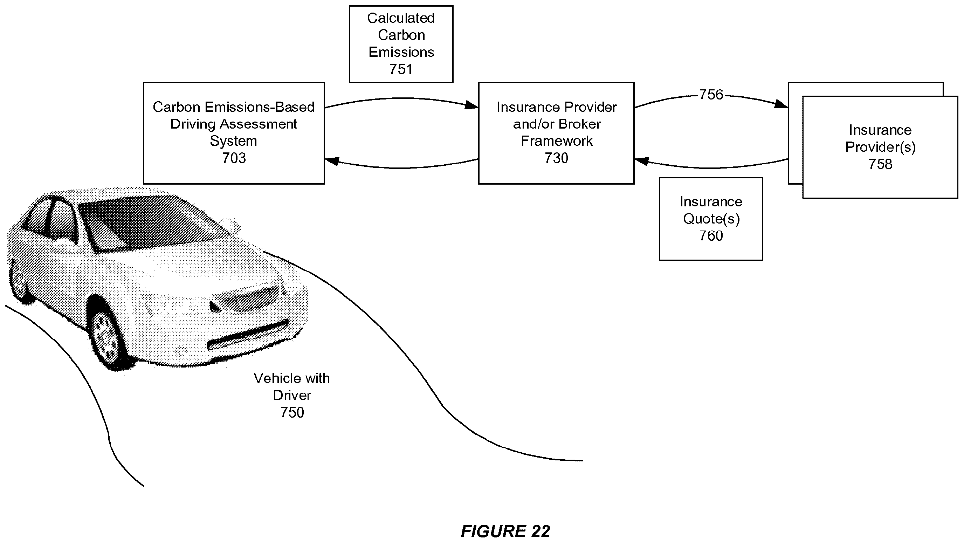

**Figure 22** illustrates use of a system for characterizing driver performance. As shown in Figure 22, during use, a driver of a vehicle 750 can use the carbon emissions-based driving assessment system to calculate carbon emissions for the current driver/vehicle, and to communicate 751 the information to an insurance provider and/or broker framework for use in determining an insurance quote, or act as a broker/aggregator in inviting 756 other insurance providers 758 to offer an insurance quote 760.

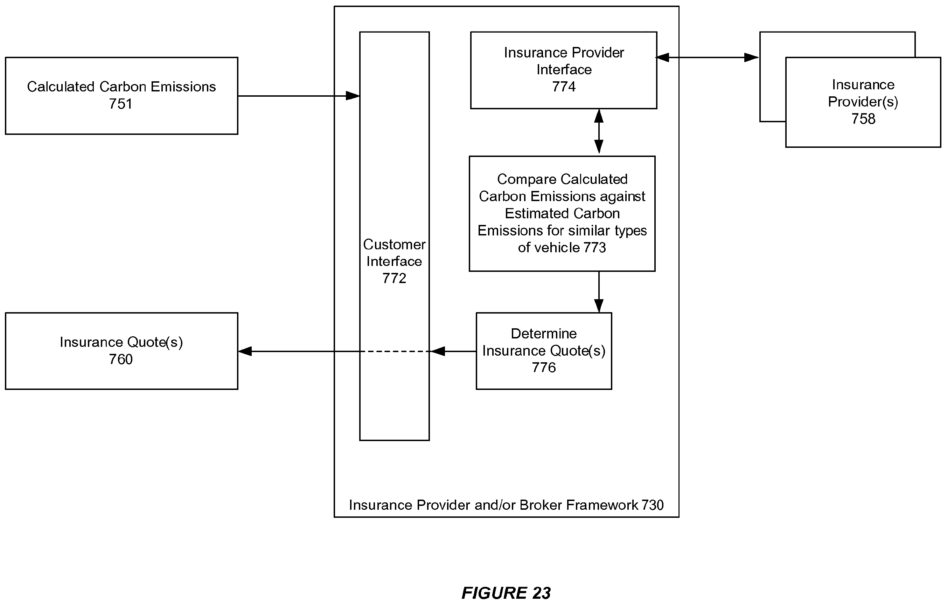

**Figure 23** illustrates use of an insurance provider and/or broker framework. As shown in Figure 23, an insurance provider and/or broker framework includes a customer interface 772 that allows a driver to communicate their calculated carbon emissions, and an insurance provider interface 774 that enables the insurance provider and/or broker to invite other insurance providers to offer 776 an insurance quote personalized to the driver, based on a comparison 773 of the calculated carbon emissions against estimated carbon emissions for similar types of vehicle. The information received from the carbon emissions-based driving assessment system can be secured and/or anonymized prior to determining the driver's insurance quote, or inviting other insurance providers to offer an insurance quote.

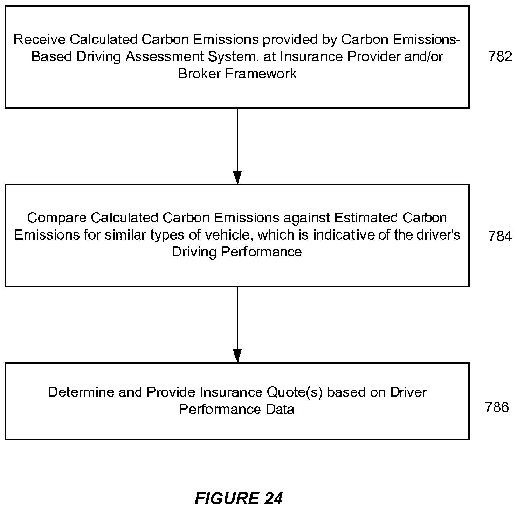

**Figure 24** is a flowchart of a method for use of carbon emissions in characterizing driver performance and use in determining insurance coverage. As shown in Figure 24, at step 782, the system receives calculated carbon emissions provided by the carbon emissions-based driving assessment system, at the insurance provider and/or broker framework. At step 784, the system compares calculated carbon emissions against estimated carbon emissions for similar types of vehicle, which is indicative of the driver's driving profile. At step 786, the system determines and provides insurance quote(s) based on the calculated carbon emissions for the driver/vehicle.

The present invention may be conveniently implemented using one or more conventional general purpose or specialized digital computers or microprocessors programmed according to the teachings of the present disclosure, or a portable device (e.g., a smartphone, PDA, computer or other device), equipped with a data collection and assessment environment, including one or more data collection devices (e.g., accelerometers, GPS). Appropriate software coding can readily be prepared by skilled programmers based on the teachings of the present disclosure, as will be apparent to those skilled in the software art.

In some examples, the present invention includes a computer program product which is a non-transitory storage medium (media) having instructions stored thereon/in which can be used to program a computer to perform any of the processes of the present invention. The storage medium can include, but is not limited to, any type of disk including floppy disks, optical discs, DVD, CD-ROMs, microdrive, and magnetooptical disks, ROMs, RAMs, EPROMs, EEPROMs, DRAMs, VRAMs, flash memory devices, magnetic or optical cards, nanosystems (including molecular memory ICs), or any type of media or device suitable for storing instructions and/or data.

The foregoing description of the present invention has been provided for the purposes of illustration and description. It is not intended to be exhaustive or to limit the invention to the precise forms disclosed. The embodiments were chosen and described in order to best explain the principles of the invention and its practical application, thereby enabling others skilled in the art to understand the invention for various embodiments and with various modifications that are suited to the particular use contemplated. For example, although the illustrations provided herein primarily describe embodiments using vehicles, it will be evident that the techniques described herein can be similarly used with, e.g., trains, ships, airplanes, containers, or other moving equipment, and with other types of data collection devices. It is intended that the scope of the invention be defined by the following claims and their equivalence.

## Claims

1. A system using an accelerometer to determine a frame of reference, for subsequent use in assessing or monitoring a status of a vehicle, or operator thereof, comprising:
a data collection and assessment system mounted to the interior of a vehicle, the data collection and assessment system comprising one or more data collection devices, including one or more accelerometers, that collects information from the one or more accelerometers as the vehicle is moving; and
a frame determination module which samples or otherwise receives accelerometer data, collected as the vehicle is moving, over a period of time including changes in acceleration and deceleration provided by instances of braking, and also information from one or more other on-board devices, and uses this information to determine a frame of reference for the system relative to the moving vehicle, wherein the frame determination module determines the frame of reference by sampling the accelerometer data, and:
determining averages of the accelerometer data over a period of time to determine the moving vehicle's x-y plane;
averaging the accelerometer data over several braking instances to determine the moving vehicle's y-axis;
using the determined x-y plane and y-axis of the moving vehicle to determine the x-axis and z-axis for the moving vehicle; and
thereby determining a rotation matrix that reflects the skew between the system's orientation and understanding of direction, and the vehicle's true orientation or direction in three-dimensions, thereby allowing corrections to be made to the system accelerometer data to more accurately determine the vehicle's true orientation/direction and motion.

2. The system of claim 1, further comprising a data communication module which enables communication of the collected information, and vehicle motion characterizations, to one or more other systems.

3. The system of claim 1, wherein the collected information, and vehicle motion characterizations are used together with pattern matching as part of an operator assessment and monitoring system or service.

4. The system of claim 1, wherein the frame determination module determines the frame of reference by sampling the accelerometer data, and first determining averages over a period of time, to determine the moving vehicle's x-y plane, and then averaging the accelerometer data over several braking instances to determine an x-axis, y-axis and z-axis for the moving vehicle.

5. The system of claim 1, wherein the x-axis, y-axis and z-axis determinations are stored as a rotation matrix, and used to subsequently characterize motions of the moving vehicle in three dimensions.

6. A method for use with an accelerometer to determine a frame of reference, for subsequent use in assessing or monitoring a status of a vehicle, or operator thereof, comprising:
using one or more accelerometers mounted to the interior of a vehicle to collect information including changes in acceleration and deceleration provided by instances of braking as the vehicle is moving; and sampling or otherwise receiving the accelerometer data over a period of time, and information from one or more other on-board devices, and
using this information to determine a frame of reference for the system relative to the moving vehicle, wherein the frame determination module determines the frame of reference by sampling the accelerometer data, and:
determining averages of the accelerometer data over a period of time to determine the moving vehicle's x-y plane;
averaging the accelerometer data over several braking instances to determine the moving vehicle's y-axis;
using the determined x-y plane and y-axis of the moving vehicle to determine the x-axis and z-axis for the moving vehicle; and
thereby determining a rotation matrix that reflects the skew between the system's orientation and understanding of direction, and the vehicle's true orientation or direction in three- dimensions, thereby allowing corrections to be made to the system accelerometer data to more accurately determine the vehicle's true orientation/direction and motion.

7. The method of claim 6, further comprising a data communication module which enables communication of the collected information, and vehicle motion characterizations, to one or more other systems.

8. The method of claim 7, wherein the collected information, and vehicle motion characterizations are used together with pattern matching as part of an operator assessment and monitoring system or service.

9. The method of claim 6, wherein the frame determination module determines the frame of reference by sampling the accelerometer data, and first determining averages over a period of time, to determine the moving vehicle's x-y plane, and then averaging the accelerometer data over several braking instances to determine an x-axis, y-axis and z-axis for the moving vehicle.

10. The method of claim 6, wherein the x-axis, y-axis and z-axis determinations are stored as a rotation matrix, and used to subsequently characterize motions of the moving vehicle in three dimensions.

11. A non-transitory computer readable medium, including instructions stored thereon which when read and executed by one or more computers cause the one or more computers to perform the steps comprising:
using one or more accelerometers of a system mounted to the interior of a vehicle to collect information including changes in acceleration and deceleration provided by instances of braking as the vehicle is moving; and sampling or otherwise receiving the accelerometer data over a period of time, and information from one or more other on-board devices, and
using this information to determine a frame of reference for the system relative to the moving vehicle, wherein the frame determination module determines the frame of reference by sampling the accelerometer data, and:
determining averages of the accelerometer data over a period of time to determine the moving vehicle's x-y plane;
averaging the accelerometer data over several braking instances to determine the moving vehicle's y-axis;
using the determined x-y plane and y-axis of the moving vehicle to determine the x-axis and z-axis for the moving vehicle; and
thereby determining a rotation matrix that reflects the skew between the system's orientation and understanding of direction, and the vehicle's true orientation or direction in three-dimensions, thereby allowing corrections to be made to the system accelerometer data to more accurately determine the vehicle's true orientation/direction and motion.

## Patentansprüche

1. System, das einen Beschleunigungsmesser verwendet, um einen Referenzrahmen zur nachfolgenden Verwendung bei der Beurteilung oder Überwachung eines Status eines Fahrzeugs oder eines Betreibers davon zu bestimmen, umfassend:
ein Datenerfassungs- und -bewertungssystem, das im Inneren eines Fahrzeugs angebracht ist, wobei das Datenerfassungs- und - bewertungssystem eine oder mehrere Datenerfassungsvorrichtungen, einschließlich eines oder mehrerer Beschleunigungsmesser, umfasst, die Informationen von dem einen oder den mehreren Beschleunigungsmessern, wenn sich das Fahrzeug bewegt, erfasst bzw. erfassen; und
ein Rahmenbestimmungsmodul, das Beschleunigungsmesserdaten, die erfasst werden, wenn sich das Fahrzeug bewegt, über einen Zeitraum abtastet oder anderweitig empfängt, einschließlich Änderungen hinsichtlich Beschleunigung und Verlangsamung, die durch Bremsinstanzen bereitgestellt werden, und auch Informationen von einem oder mehreren anderen an Bord befindlichen Geräten abtastet oder anderweitig empfängt und diese Informationen verwendet, um einen Referenzrahmen für das System in Bezug auf das sich bewegende Fahrzeug zu bestimmen, wobei das Rahmenbestimmungsmodul den Referenzrahmen durch Abtasten der Beschleunigungsmesserdaten bestimmt, und:
Bestimmen von Durchschnittswerten der Beschleunigungsmesserdaten über einen Zeitraum, um die x-y-Ebene des sich bewegenden Fahrzeugs zu bestimmen;
Bilden von Durchschnittswerten der Beschleunigungsmesserdaten über mehrere Bremsinstanzen, um die y-Achse des sich bewegenden Fahrzeugs zu bestimmen;
Verwenden der bestimmten x-y-Ebene und y-Achse des sich bewegenden Fahrzeugs, um die x-Achse und die z-Achse für das sich bewegende Fahrzeug zu bestimmen; und
dadurch Bestimmen einer Rotationsmatrix, die den Versatz zwischen Ausrichtung und Richtungsverständnis des Systems und tatsächlicher Ausrichtung oder Richtung des Fahrzeugs in drei Dimensionen wiedergibt, wodurch Korrekturen an den Beschleunigungsmesserdaten des Systems ermöglicht werden, um die tatsächliche Ausrichtung/Richtung und Bewegung des Fahrzeugs genauer zu bestimmen.

2. System nach Anspruch 1, das ferner ein Datenkommunikationsmodul umfasst, das eine Übermittlung der erfassten Informationen und Fahrzeugbewegungsmerkmale an ein oder mehrere andere Systeme ermöglicht.

3. System nach Anspruch 1, wobei die erfassten Informationen und Fahrzeugbewegungsmerkmale zusammen mit einem Mustervergleich als Teil eines Betreiberbewertungs- und -überwachungssystems oder - diensts verwendet werden.

4. System nach Anspruch 1, wobei das Rahmenbestimmungsmodul den Referenzrahmen bestimmt durch Abtasten der Beschleunigungsmesserdaten und zunächst Bestimmen von Durchschnittswerten über einen Zeitraum, um die x-y-Ebene des sich bewegenden Fahrzeugs zu bestimmen, und anschließend Bilden von Durchschnittswerten der Beschleunigungsmesserdaten über mehrere Bremsinstanzen, um eine x-Achse, y-Achse und z-Achse für das sich bewegende Fahrzeug zu bestimmen.

5. System nach Anspruch 1, wobei die Bestimmungen der x-Achse, y-Achse und z-Achse als eine Rotationsmatrix gespeichert und verwendet werden, um anschließend Bewegungen des sich bewegenden Fahrzeugs in drei Dimensionen zu kennzeichnen.

6. Verfahren zur Verwendung mit einem Beschleunigungsmesser zum Bestimmen eines Referenzrahmens zur nachfolgenden Verwendung bei der Beurteilung oder Überwachung eines Status eines Fahrzeugs oder eines Betreibers davon, umfassend:
Verwenden eines oder mehrerer Beschleunigungsmesser, die im Inneren eines Fahrzeugs angebracht sind, um Informationen, einschließlich Änderungen der Beschleunigung und Verlangsamung, die durch Bremsinstanzen bereitgestellt werden, zu erfassen, wenn sich das Fahrzeug bewegt; und Abtasten oder anderweitiges Empfangen der Beschleunigungsmesserdaten über einen Zeitraum und von Informationen von einem oder mehreren anderen an Bord befindlichen Geräten, und
Verwenden dieser Informationen, um einen Referenzrahmen für das System in Bezug auf das sich bewegende Fahrzeug zu bestimmen, wobei das Rahmenbestimmungsmodul den Referenzrahmen durch Abtasten der Beschleunigungsmesserdaten bestimmt, und:
Bestimmen von Durchschnittswerten der Beschleunigungsmesserdaten über einen Zeitraum, um die x-y-Ebene des sich bewegenden Fahrzeugs zu bestimmen;
Bilden von Durchschnittswerten der Beschleunigungsmesserdaten über mehrere Bremsinstanzen, um die y-Achse des sich bewegenden Fahrzeugs zu bestimmen;
Verwenden der bestimmten x-y-Ebene und y-Achse des sich bewegenden Fahrzeugs, um die x-Achse und die z-Achse für das sich bewegende Fahrzeug zu bestimmen; und
dadurch Bestimmen einer Rotationsmatrix, die den Versatz zwischen Ausrichtung und Richtungsverständnis des Systems und tatsächlicher Ausrichtung oder Richtung des Fahrzeugs in drei Dimensionen wiedergibt, wodurch Korrekturen an den Beschleunigungsmesserdaten des Systems ermöglicht werden, um die tatsächliche Ausrichtung/Richtung und Bewegung des Fahrzeugs genauer zu bestimmen.

7. Verfahren nach Anspruch 6, das ferner ein Datenkommunikationsmodul umfasst, das eine Übermittlung der erfassten Informationen und Fahrzeugbewegungsmerkmale an ein oder mehrere andere Systeme ermöglicht.

8. Verfahren nach Anspruch 7, wobei die erfassten Informationen und Fahrzeugbewegungsmerkmale zusammen mit einem Mustervergleich als Teil eines Betreiberbewertungs- und -überwachungssystems oder -diensts verwendet werden.

9. Verfahren nach Anspruch 6, wobei das Rahmenbestimmungsmodul den Referenzrahmen bestimmt durch Abtasten der Beschleunigungsmesserdaten und zunächst Bestimmen von Durchschnittswerten über einen Zeitraum, um die x-y-Ebene des sich bewegenden Fahrzeugs zu bestimmen, und anschließend Bilden von Durchschnittswerten der Beschleunigungsmesserdaten über mehrere Bremsinstanzen, um eine x-Achse, y-Achse und z-Achse für das sich bewegende Fahrzeug zu bestimmen.

10. Verfahren nach Anspruch 6, wobei die Bestimmungen der x-Achse, y-Achse und z-Achse als eine Rotationsmatrix gespeichert und verwendet werden, um anschließend Bewegungen des sich bewegenden Fahrzeugs in drei Dimensionen zu kennzeichnen.

11. Nichtflüchtiges computerlesbares Medium, das darauf gespeicherte Anweisungen beinhaltet, die, wenn sie von einem oder mehreren Computern gelesen und ausgeführt werden, den einen oder die mehreren Computer veranlassen, die Schritte durchzuführen, die Folgendes umfassen:
Verwenden eines oder mehrerer Beschleunigungsmesser eines Systems, die im Inneren eines Fahrzeugs angebracht sind, um Informationen, einschließlich Änderungen der Beschleunigung und Verlangsamung, die durch Bremsinstanzen bereitgestellt werden, zu erfassen, wenn sich das Fahrzeug bewegt; und Abtasten oder anderweitiges Empfangen der Beschleunigungsmesserdaten über einen Zeitraum und von Informationen von einem oder mehreren anderen an Bord befindlichen Geräten, und
Verwenden dieser Informationen, um einen Referenzrahmen für das System in Bezug auf das sich bewegende Fahrzeug zu bestimmen, wobei das Rahmenbestimmungsmodul den Referenzrahmen durch Abtasten der Beschleunigungsmesserdaten bestimmt, und:
Bestimmen von Durchschnittswerten der Beschleunigungsmesserdaten über einen Zeitraum, um die x-y-Ebene des sich bewegenden Fahrzeugs zu bestimmen;
Bilden von Durchschnittswerten der Beschleunigungsmesserdaten über mehrere Bremsinstanzen, um die y-Achse des sich bewegenden Fahrzeugs zu bestimmen;
Verwenden der bestimmten x-y-Ebene und y-Achse des sich bewegenden Fahrzeugs, um die x-Achse und die z-Achse für das sich bewegende Fahrzeug zu bestimmen; und
dadurch Bestimmen einer Rotationsmatrix, die den Versatz zwischen Ausrichtung und Richtungsverständnis des Systems und tatsächlicher Ausrichtung oder Richtung des Fahrzeugs in drei Dimensionen wiedergibt, wodurch Korrekturen an den Beschleunigungsmesserdaten des Systems ermöglicht werden, um die tatsächliche Ausrichtung/Richtung und Bewegung des Fahrzeugs genauer zu bestimmen.

## Revendications

1. Système utilisant un accéléromètre pour déterminer une trame de référence, pour une utilisation ultérieure dans l'évaluation ou la surveillance d'un état d'un véhicule, ou d'un opérateur de celui-ci, comprenant :
un système de collecte et d'évaluation de données monté à l'intérieur d'un véhicule, le système de collecte et d'évaluation de données comprenant un ou plusieurs dispositifs de collecte de données, comportant un ou plusieurs accéléromètres, qui collecte des informations à partir des un ou plusieurs accéléromètres lorsque le véhicule se déplace ; et
un module de détermination de trame qui échantillonne ou reçoit autrement des données d'accéléromètre, collectées pendant que le véhicule se déplace, sur une période de temps comportant des changements d'accélération et de décélération fournis par des instances de freinage, et également des informations provenant d'un ou de plusieurs autres dispositifs embarqués, et utilise ces informations pour déterminer une trame de référence pour le système par rapport au véhicule en déplacement, dans lequel le module de détermination de trame détermine la trame de référence en échantillonnant les données d'accéléromètre, et :
la détermination de moyennes des données d'accéléromètre sur une période de temps pour déterminer le plan x-y du véhicule en déplacement ;
le calcul de la moyenne des données d'accéléromètre sur plusieurs instances de freinage pour déterminer l'axe y du véhicule en déplacement ;
l'utilisation du plan x-y et de l'axe y déterminés du véhicule en déplacement pour déterminer l'axe x et l'axe z pour le véhicule en déplacement ; et
la détermination, ainsi, d'une matrice de rotation qui rend compte de de la distribution asymétrique entre l'orientation et l'interprétation de la direction du système, et l'orientation ou la direction véritables du véhicule en trois dimensions, permettant ainsi des corrections à apporter aux données d'accéléromètre de système afin de déterminer plus précisément l'orientation/la direction et le mouvement véritables du véhicule.

2. Système selon la revendication 1, comprenant en outre un module de communication de données qui permet la communication des informations collectées, et des caractérisations de mouvement de véhicule, à un ou plusieurs autres systèmes.

3. Système selon la revendication 1, dans lequel les informations collectées et les caractérisations de mouvement de véhicule sont utilisées ensemble avec une mise en concordance de motifs en tant que partie d'un système ou service d'évaluation et de surveillance de l'opérateur.

4. Système selon la revendication 1, dans lequel le module de détermination de trame détermine la trame de référence en échantillonnant les données d'accéléromètre, et en déterminant d'abord des moyennes sur une période de temps, afin de déterminer le plan x-y du véhicule en déplacement, puis en calculant la moyenne des données d'accéléromètre sur plusieurs instances de freinage afin de déterminer un axe x, un axe y et un axe z pour le véhicule en déplacement.

5. Système selon la revendication 1, dans lequel les déterminations d'axe x, d'axe y et d'axe z sont stockées comme une matrice de rotation, et utilisées pour caractériser ultérieurement des mouvements du véhicule en déplacement en trois dimensions.

6. Procédé destiné à être utilisé avec un accéléromètre pour déterminer une trame de référence, pour une utilisation ultérieure dans l'évaluation ou la surveillance d'un état d'un véhicule, ou d'un opérateur de celui-ci, comprenant :
l'utilisation d'un ou plusieurs accéléromètres montés à l'intérieur d'un véhicule pour collecter des informations comportant des changements d'accélération et de décélération fournis par des instances de freinage lorsque le véhicule se déplace ; et l'échantillonnage ou autrement la réception des données d'accéléromètre sur une période de temps, et des informations provenant d'un ou plusieurs autres dispositifs embarqués, et
l'utilisation de ces informations pour déterminer une trame de référence pour le système par rapport au véhicule en déplacement, dans lequel le module de détermination de trame détermine la trame de référence en échantillonnant les données d'accéléromètre, et :
la détermination de moyennes des données d'accéléromètre sur une période de temps pour déterminer le plan x-y du véhicule en déplacement ;
le calcul de la moyenne des données d'accéléromètre sur plusieurs instances de freinage pour déterminer l'axe y du véhicule en déplacement ;
l'utilisation du plan x-y et de l'axe y déterminés du véhicule en déplacement pour déterminer l'axe x et l'axe z pour le véhicule en déplacement ; et
la détermination, ainsi, d'une matrice de rotation qui rend compte de de la distribution asymétrique entre l'orientation et l'interprétation de la direction du système, et l'orientation ou la direction véritables du véhicule en trois dimensions, permettant ainsi des corrections à apporter aux données d'accéléromètre de système afin de déterminer plus précisément l'orientation/la direction et le mouvement véritables du véhicule.

7. Procédé selon la revendication 6, comprenant en outre un module de communication de données qui permet la communication des informations collectées, et des caractérisations de mouvement de véhicule, à un ou plusieurs autres systèmes.

8. Procédé selon la revendication 7, dans lequel les informations collectées et les caractérisations de mouvement de véhicule sont utilisées ensemble avec une mise en concordance de motifs en tant que partie d'un système ou service d'évaluation et de surveillance de l'opérateur.

9. Procédé selon la revendication 6, dans lequel le module de détermination de trame détermine la trame de référence en échantillonnant les données d'accéléromètre, et en déterminant d'abord des moyennes sur une période de temps, afin de déterminer le plan x-y du véhicule en déplacement, puis en calculant la moyenne des données d'accéléromètre sur plusieurs instances de freinage afin de déterminer un axe x, un axe y et un axe z pour le véhicule en déplacement.

10. Procédé selon la revendication 6, dans lequel les déterminations d'axe x, d'axe y et d'axe z sont stockées comme une matrice de rotation, et utilisées pour caractériser ultérieurement des mouvements du véhicule en déplacement en trois dimensions.

11. Support non transitoire lisible par ordinateur, comportant des instructions stockées sur celui-ci qui, lorsqu'elles sont lues et exécutées par un ou plusieurs ordinateurs, amènent les un ou plusieurs ordinateurs à réaliser les étapes comprenant :
l'utilisation d'un ou plusieurs accéléromètres d'un système montés à l'intérieur d'un véhicule pour collecter des informations comportant des changements d'accélération et de décélération fournis par des instances de freinage lorsque le véhicule se déplace ; et l'échantillonnage ou autrement la réception des données d'accéléromètre sur une période de temps, et des informations provenant d'un ou plusieurs autres dispositifs embarqués, et
l'utilisation de ces informations pour déterminer une trame de référence pour le système par rapport au véhicule en déplacement, dans lequel le module de détermination de trame détermine la trame de référence en échantillonnant les données d'accéléromètre, et :
la détermination de moyennes des données d'accéléromètre sur une période de temps pour déterminer le plan x-y du véhicule en déplacement ;
le calcul de la moyenne des données d'accéléromètre sur plusieurs instances de freinage pour déterminer l'axe y du véhicule en déplacement ;
l'utilisation du plan x-y et de l'axe y déterminés du véhicule en déplacement pour déterminer l'axe x et l'axe z pour le véhicule en déplacement ; et
la détermination, ainsi, d'une matrice de rotation qui rend compte de de la distribution asymétrique entre l'orientation et l'interprétation de la direction du système, et l'orientation ou la direction véritables du véhicule en trois dimensions, permettant ainsi des corrections à apporter aux données d'accéléromètre de système afin de déterminer plus précisément l'orientation/la direction et le mouvement véritables du véhicule.
